(19) Europäisches Patentamt / European Patent Office / Office européen des brevets

(11) **EP 3 865 534 B1**

(12) **EUROPEAN PATENT SPECIFICATION**

(45) Date of publication and mention
of the grant of the patent:
**12.03.2025 Bulletin 2025/11**

(21) Application number: **21150687.8**

(22) Date of filing: **08.01.2021**

(51) International Patent Classification (IPC):
**C08J 3/075** (2006.01)     **C08J 11/04** (2006.01)
**C08B 37/00** (2006.01)

(52) Cooperative Patent Classification (CPC):
**C08J 3/075; C08B 37/0084; C08J 11/04;**
C08J 2300/24; Y02P 20/143; Y02W 30/62

(54) **METHOD FOR RECYCLING MATERIALS OBTAINED THROUGH GELIFICATION**

VERFAHREN ZUR WIEDERVERWERTUNG VON DURCH GELIERUNG GEWONNENEN
MATERIALIEN

PROCÉDÉ DE RECYCLAGE DE MATÉRIAUX OBTENUS PAR GÉLIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2020 IT 202000000322**

(43) Date of publication of application:
**18.08.2021 Bulletin 2021/33**

(73) Proprietor: **Universita Degli Studi di Trieste
34127 Trieste (IT)**

(72) Inventors:
• **LUGHI, Vanni
34134 Trieste (IT)**

• **CIBINEL, Matteo
30027 San Donà di Piave (IT)**

(74) Representative: **Valenza, Silvia et al
Notarbartolo & Gervasi S.p.A.
Viale Achille Papa, 30
20149 Milano (IT)**

(56) References cited:
**EP-A1- 3 216 825     WO-A1-2016/014158
US-A- 5 718 862**

• **DATABASE WPI Week 201974, Derwent World
Patents Index; AN 2019-76019R, XP002800183**

**Description**

**TECHNICAL FIELD**

The present invention relates to the technical field of the recycling of materials comprising polymers cross-linked by ionic interaction

**BACKGROUND OF THE INVENTION**

The use of materials comprising cross-linked polymers, that is polymers that form polymeric networks, is widespread in a very wide range of technological sectors, ranging - by way of example - from the construction sector, to the automotive, aerospace and nautical sectors, to the food, biomedical and pharmaceutical sectors, as well as the packaging sector.

In these sectors, and in particular in the food, biomedical and pharmaceutical sectors, the use of polymers which are cross-linked through ionic interaction (so-called "ionically cross-linked polymers") has become more and more widespread, which peculiarity lies in the fact that the junction between the different polymer chains occurs through ionic interactions, thus making it possible to exclude the use of cross-linking agents that can sometimes cause toxicity problems.

US 5 718 862 discloses a method for preparing a medical device having the steps: (1) treating an ionically crosslinked hydrogel to strip a substantial amount of the ionic crosslinks while retaining the hydrogel in a desired shape; and (2) ionically re-crosslinking the treated hydrogel of step (1) while retaining the hydrogel in the desired shape.

WO 2016/014158 relates to a resilient foam including a derivatized polyanionic polysaccharide and having an open-cell structure. When the resilient foam according to WO 2016/014158 is contacted with water, it forms a thixotropic hydrogel.

CN110183927 relates to a fireproof thermal-insulating material prepared by (1) dissolving an electronegative monomer with a cross-linking agent and an initiator into deionized water, synthesizing electronegative hydrogel, grinding the hydrogel, and carrying out drying treatment so as to obtain gel microspheres; (2) uniformly smearing a sodium alginate solution with an initiator onto a basalt membrane, and drying for later use; (3) preparing a gel solution with a second-layer network monomer, swelling the gel microspheres in the gel solution so as to obtain a gel microsphere precursor, further smearing the gel microsphere precursor onto the basalt membrane obtained in the step (2), and polymerizing for 6 hours at 50 °C, thereby obtaining a hydrogel-basalt composite material.

Among the polymers cross-linked by ionic interaction, those based on polyanionic polymers, and in particular those based on anionic polysaccharides, have been particularly successful, since polysaccharides represent a widely available, biodegradable and of natural origin raw material. Among the anionic polysaccharides, particular interest has been shown in alginates.

Although they have been improved in terms of performances and on their related environmental impact, ionic cross-linked polymers still present a number of technical limitations when considerin g their so-called "end-of-life". As a matter of fact, the disposal of materials comprising these polymers today represents almost exclusively the only economically and technically advantageous choice. This entails a cost both in economic and environmental terms for the entire production chain and, in particular, for the user.

In this context, the Applicant has found that, although there are already known in literature and in the industry recycling methods that aim at the recovery and valorization at the end of life of articles obtained from materials comprising cross-linked polymers, there is still the need to identify efficient and low-cost recycling methods in the specific case of materials comprising cross-linked polymers through ionic interaction, such as in particular those comprising polysaccharides.

**SUMMARY OF THE INVENTION**

The aim, therefore, of the present invention is the development of a recycling process capable of providing an efficient and low-cost method allowing the recycling of materials comprising polymers cross-linked by ionic interaction based on polyanionic polymers.

The applicant has surprisingly observed that it is possible to achieve this and other desirable purposes by reversibly subtracting from the polymeric ionic network the ionic species that acts as a junction between the polymer chains in the polymeric network itself, thereby enabling its subsequent reconstitution and thus the recycling of the material.

In a first aspect, therefore, the present invention relates to a method for recycling a material comprising at least one continuous phase consisting of an ionic polymeric network composed of a polyanionic polymer and at least one cation, comprising the steps of:

(a) preparing a powder of at least one material comprising at least one continuous phase consisting of an ionic polymeric network composed of at least one polyanionic polymer and at least one cation;

(b) preparing an aqueous solution of a complexing agent of said at least one cation;

(c) adding to the aqueous solution of step (b) the powder obtained from step (a), in order to disaggregate said ionic polymeric network composed of at least one polyanion and at least one cation and obtain an aqueous mixture comprising at least one polyanionic polymer and at least one complex of said at least one cation with said complexing agent;

(d) adding to the aqueous mixture of step (c) an acidifying agent, so as to decompose said complex and form a hydrogel comprising an ionic polymeric network composed of said at least one polyanionic polymer and said at least one cation; and

e) dehydrating said hydrogel of step d), so as to obtain a recycled material comprising at least one continuous phase consisting of an ionic polymeric network composed of said at least one polyanionic polymer and said at least one cation.

The method of the present invention, by bringing into contact with the material to be recycled an aqueous solution of a complexing agent of said at least one cation, disaggregates the ionic polymeric network comprising said at least one polyanionic polymer and said at least one cation thereby subtracting from the ionic polymeric network the ionic species acting as a junction between the polymer chains in said polymeric network. Through the subsequent acidification of the aqueous mixture obtained in this way, the complex is then decomposed, so making available again said cation that can then reconstitute, together with the polyanionic polymer, the ionic polymeric network. This then allows the material to be recycled.

The possibility to recycle a material comprising at least one continuous phase consisting of an ionic polymeric network composed of at least one polyanionic polymer and at least one cation increases the commercial value of said material at the same amount of raw material used in the production, reducing at the same time the related costs both in economic and environmental terms for the whole production chain and, in particular, for the user.

Moreover, the Applicant has found that a further advantage connected to the method according to the present invention lies in the fact that the recycled material obtainable by said method presents appreciable properties, entirely similar, in particular in terms of thermal and acoustic properties, and in alignment with those of the material before recycling. This therefore makes it possible to maintain, even with a renewed material following recycling, the original performance while offering - at a lower environmental and economic cost - a further advantage to the user.

In a further aspect thereof, the present invention therefore also relates to a recycled material comprising at least one continuous phase consisting of a polymeric ionic network composed of at least one polyanionic polymer and at least one cation and wherein said recycled material further comprises a complexing agent of said at least one cation. The said material is advantageously obtainable by means of the method according to the present invention.

Advantages relating to this further aspect of the invention are the same as those of the method according to the present invention and are therefore not repeated herein.

The recycled material advantageously obtainable by means of the method according to the present invention, having entirely similar properties, in particular thermal and acoustic properties, and in line with the material before recycling is therefore suitable for use in the manufacture of articles such as, for example, sound absorbing panel, sound insulating panel, and heat insulating panel.

In a further aspect thereof, the present invention also relates to an article selected from the group consisting of: sound absorbing panel, sound insulating panel and heat insulating panel, wherein at least one element of such article is made from the recycled material according to the present invention.

## BRIEF DESCRIPTION OF FIGURES

Figure 1 shows the sound absorption curves obtained from the characterization of the recycled material (RICIC) of Example 1 and the starting material (ORIG) obtained in Reference Example 1; and

Figure 2 shows compressive strength curves obtained from characterization of the recycled material (RICIC) of Example 1 and the starting material (ORIG) obtained in Reference Example 1.

## DETAILED DESCRIPTION OF THE INVENTION

In a first aspect, therefore, the present invention relates to a method for recycling a material comprising at least one continuous phase consisting of an ionic polymeric network composed a polyanionic polymer and at least one cation, comprising the steps of:

(a) preparing a powder of at least one material comprising at least one continuous phase consisting of an ionic polymeric network composed of at least one polyanionic polymer and at least one cation;

(b) preparing an aqueous solution of a complexing agent of said at least one cation;

(c) adding to the aqueous solution of step (b) the powder obtained from step (a), in order to disaggregate said ionic polymeric network composed of at least one polyanionic polymer and at least one cation and obtain an aqueous mixture comprising at least one polyanionic polymer and at least one complex of said at least one cation with said complexing agent;

(d) adding to the aqueous mixture of step (c) an acidifying agent, so as to decompose said complex and form a hydrogel comprising an ionic polymeric network composed of said at least one polyanionic polymer and said at least one cation; and

e) dehydrating said hydrogel of step d), so as to obtain a recycled material comprising at least one continuous phase consisting of an ionic polymeric network composed of said at least one polyanionic polymer and said at least one cation.

The method of the present invention, by bringing into contact with the material to be recycled an aqueous solution of a complexing agent of said at least one cation, disaggregates the ionic polymeric network comprising said at least one polyanionic polymer and said at least one cation thereby subtracting from the ionic polymeric network the ionic species acting as a junction between the polymer chains in said polymeric network. Through the subsequent acidification of the aqueous mixture obtained in this way, the complex is then decomposed, so making available again said cation that can then reconstitute, together with the polyanionic polymer, the ionic polymeric network and thus allowing the recycling of the material.

The possibility to recycle a material comprising at least one continuous phase consisting of an ionic polymeric network composed of at least one polyanionic polymer and at least one cation increases the commercial value of said material at the same amount of raw material used in the production, reducing at the same time the related costs both in economic and environmental terms for the whole production chain and, in particular, for the user.

Moreover, the Applicant has found that a further advantage connected to the method according to the present invention lies in the fact that the recycled material obtainable from it presents completely similar properties, in particular thermal and acoustic, and in line with the material before recycling. This makes it possible to maintain, even with a renewed material as a result of recycling, the original performance, thus offering - at a lower environmental and economic cost - a further advantage to the user.

The present invention can exhibit in one or more of its aspects one or more of the following preferred features, which may be combined with each other in accordance with application requirements.

Within the scope of the present description and subsequent claims, all numerical quantities indicating quantities, parameters, percentages, and so forth are to be considered preceded in all circumstances by the term "about" unless otherwise indicated. Further, all numerical quantity ranges include all possible combinations of maximum and minimum numerical values and all possible intermediate ranges, other than those specifically indicated below.

Within the scope of the present description and subsequent claims, when using the expression:

-    "ionic polymeric network" it is meant a three-dimensional polymeric structure formed through the establishment of an electrostatic interaction (or molecular one that is non-covalent in nature) between ionic polymer chains and at least one counterion, which acts as a junction point of a network; and

-    "Hydrogel" it is meant a heterophasic system comprising a water based dispersing phase and a dispersed phase composed of a continuous ionic polymeric network, wherein the water based dispersing phase is incorporated within the network.

The starting material of the method according to the present invention comprises at least one continuous phase consisting of an ionic polymeric network composed of at least one polyanionic polymer and at least one cation.

Preferably, said at least one polyanionic polymer is an anionic polysaccharide, wherein even more preferably said polysaccharide is selected from the group consisting of: alginate, carrageenan, hyaluronic acid, pectin, cellulose, and xanthan.

More preferably, said at least one polyanionic polymer is alginate.

Preferably, said at least one cation is selected from the group consisting of: $K^+$, $Ca^{2+}$, $Sr^{2+}$, $Cu^{2+}$, $Ba^{2+}$, $Zn^{2+}$, $Co^{2+}$, $Mn^{2+}$, $Ni^{2+}$.

More preferably, said at least one cation is $Ca^{2+}$.

Said $Ca^{2+}$ cation may originate from a suitable source, such as calcium carbonate.

In a particularly preferred form of the invention, said at least one ionic polymeric network comprises calcium alginate.

Step a) of the method according to the present invention provides for preparing a powder of at least one material comprising at least one continuous phase consisting of an ionic polymeric network composed of at least one polyanionic polymer and at least one cation.

Preferably, said step a) is conducted using a disc mill.

Preferably, said step a) is conducted at a temperature of between 10 and 40 °C, so as not to cause degradation of the starting material.

Step b) of the method according to the present invention provides for preparing a water based of a complexing agent of said at least one cation.

Said complexing agent is capable of forming a complex with said at least one cation.

Preferably, the association constant of said complexing agent with said at least one cation satisfies the following inequality (i):

$$\log_{10}(k_{complx,pH,T}) > \log_{10}(k_{pol,pH,T}) \qquad (i)$$

in which:

$k_{complx,pH,T}$ is the association constant of the complex formed by said at least one complexing agent and said at least one cation at the temperature and pH level of the solution of step (c), and

$k_{pol,pH,T}$ is the association constant of the bond formed by said at least one polyanionic polymeric network ion and said at said one cation at the temperature and pH level of the present solution of step c).

Preferably, said at least one complexing agent is selected from the group consisting of: disodium salt of ethylenediaminetetraacetic acid (2Na - EDTA), ethylenediaminetetraacetic acid (EDTA), Ethylenediaminediacetic acid (EDDA), tricine, ethylene diamino-disuccinic acid (EDDS), and methyl-glycine diacetate (MGDA).

More preferably, said at least one complexing agent is ethylenediaminetetraacetic acid salt, even more preferably disodium salt of ethylenediaminetetraacetic acid.

Preferably in said step b) said water based solution has a pH greater than or equal to 7. More preferably said water based solution has a pH ranging from 7.5 to 8.5.

However, the pH level of said solution should never be such that it causes degradation of the anionic polymer chain. Preferably, when the ionic polymeric network is composed of calcium alginate the maximum pH of the aqueous solution of step b) is in the range of 7 to 9.

Step c) of the method according to the present invention involves the addition to the aqueous solution of step b) of the powder obtained from step a), so as to disaggregate said ionic polymeric network comprising at least one polyanionic polymer and at least one cation and obtain an aqueous mixture comprising at least one polyanionic polymer and at least one complex of said at least one cation with said complexing agent.

Preferably, the aqueous mixture has a pH value at which the association constant of said complexing agent complex with said at least one cation satisfies the following inequality (i):

$$\log_{10}(k_{complx,pH,T}) > \log_{10}(k_{pol,pH,T}) \qquad (i)$$

in which:

$k_{complx,pH,T}$ is the association constant of the complex formed by said at least one complexing agent and said at least one cation at the temperature and pH level of the solution of step (c), and

$k_{pol,pH,T}$ is the association constant of the bond formed by said at least one polyanionic polymeric network ion and said at said one cation at the temperature and pH level of the present solution of step c).

Preferably, however, the pH value should never be such that it causes degradation of the polymer chain of the anionic polymer.

Preferably, in said step c), the powder obtained from step a) is dispersed while keeping the mixture in continuous stirring/mixing.

Preferably, in said step c) the aqueous mixture is maintained at a temperature ranging between 10 °C and 80 °C.

Preferably, in said step c), when the said ionic polymeric network is composed of calcium alginate, said aqueous mixture is maintained at a temperature ranging from 10 °C to 30 °C.

Preferably, in said step c), when said ionic polymeric network comprises calcium alginate, the pH of said aqueous mixture ranges from 7 to 9.

Preferably, in the mixture of step c) the at least one complexing agent is present in stoichiometric excess with respect to the at least one cation. In other words, in step c) the amount of complexing agent is preferably equal to or in excess of the amount required - according to the stoichiometry of the complex to be formed - to complex all the cation present, such that the said entire cation is complexed.

Step d) of the method according to the present invention provides for adding to the aqueous mixture of step c) an acidifying agent, so as to decompose said complex and form a hydrogel comprising an ionic polymeric network composed of said at least one polyanionic polymer and said at least one cation.

Preferably, said acidifying agent is selected from the group consisting of: an organic acid, HCl, or mixtures thereof.

Preferably said organic acid is glucono delta-lactone (GDL).

In an embodiment of the method according to the present invention, said acidifying agent is glucono delta-lactone (GDL).

In a further embodiment of the method according to the present invention, said acidifying agent is HCl. Preferably, when said acidifying agent is HCl, said HCl is added in an amount not exceeding 0.5 %v/v relative to the total volume of the aqueous mixture and, even more preferably, said aqueous mixture is brought to a temperature between 60 °C and 80 °C.

Preferably, in said step d) said acidifying agent is added to said aqueous mixture in molar excess of moles of complexing agent. Preferably, in said step d) said acidifying agent is added in an amount such that the mole ratio of said acidifying agent to said complexing agent is between 1 and 4.

Preferably, in said step d) said aqueous mixture is brought to a pH of less than or equal to 5.

Preferably, the method according to the present invention comprises the step of: transferring into a mold said hydrogel of said step d).

Step e) of the method according to the present invention provides for dehydrating said hydrogel of step d), so that a recycled material comprising at least one continuous phase consisting of an ionic polymeric network comprising at least one polyanionic polymer and at least one cation is obtained.

Preferably, said operation of dehydrating said hydrogel of phase e) is carried out by freeze-drying.

By means of the method according to the present invention, it is therefore possible to recycle a material comprising at least one continuous phase consisting of an ionic polymeric network composed of at least one polyanionic polymer and at least one cation, increasing its commercial value for the same amount of raw material used in the production, while at the same time reducing the costs associated therewith both in economic and environmental terms for the entire production chain and, in particular, for the user.

The recycled material obtainable by means from it presents properties that are completely similar, in particular in terms of thermal and acoustic properties, and in line with the material before recycling, thus making it possible to maintain the original performance of the starting material, even with a renewed material after recycling. This makes it possible to have - at a lower environmental and economic cost - a recycled material including at least one continuous phase consisting of an ionic polymeric network composed of at least one polyanionic polymer and at least one cation.

In a further aspect thereof, the present invention therefore also relates to a recycled material comprising at least one continuous phase consisting of a polymeric ionic network composed of at least one polyanionic polymer and at least one cation and wherein said recycled material further comprises a complexing agent of said at least one cation. Said material is advantageously obtainable by means of the method according to the present invention.

Advantages relating to this further aspect of the invention are the same as those of the method according to the present invention and are therefore not repeated herein.

The recycled material advantageously obtainable by means of the method according to the present invention, having entirely similar properties, in particular thermal and acoustic properties, and in line with the material before recycling is therefore suitable for use in the manufacture of articles such as, for example, sound absorbing panel, sound insulating panel, and heat insulating panel.

The material recycled according to the present invention also comprises a complexing agent of said at least one cation. In other words, the recycled material according to the present invention also comprises the complexing agent of said at least one cation, which during step c) of the method disaggregates the ionic polymeric network comprising the at least said one polyanionic polymer and the at least said one cation by subtracting from the ionic polymeric network the ionic species acting as a junction between the polymer chains in said polymeric network.

The recycled material according to this preferred embodiment exhibits the further advantage that it can be further recycled, without the need for any further additions of complexing agent, thereby further simplifying its recycling cycle.

In a further aspect, the present invention therefore relates to a method for recycling a material comprising at least one continuous step consisting of an ionic polymeric network composed of at least one polyanionic polymer and at least one cation, and at least one complexing agent of said at least one cation, comprising the steps of:

A) preparing a powder of a material comprising at least one continuous phase consisting of an ionic polymeric network composed of at least one polyanionic polymer and at least one cation, and at least one complexing agent of said at least one cation;

B) dispersing the powder obtained from step A) in an aqueous solution, so as to disaggregate said ionic polymeric network composed of at least one polyanionic polymer and at least one cation and obtain an aqueous mixture comprising at least one polyanionic polymer and at least one complex of said at least one cation with said complexing agent;

C) adding to the aqueous mixture of step B) an acidifying agent, so as to decompose said complex and form a hydrogel comprising an ionic polymeric network composed of said at least one polyanionic polymer and said at least one cation; and

D) dehydrating said hydrogel of step C).

In this way, the method according to this further aspect of the invention yields from step C) a further recycled material comprising an ionic polymeric network composed of said at least one polyanionic polymer and said at least one cation.

Preferably, the conditions and characteristics of steps A, B, C, and D of the method according to said further aspect of the invention are the same as those described above for the corresponding steps (a), (c), (d), and (e) of the method according to the first aspect of the present invention.

In a further aspect thereof, the present invention also relates to an article selected from the group consisting of: sound absorbing panel, sound insulating panel, and heat insulating panel, wherein at least one element of said article comprises or consists of at least one recycled material according to the present invention.

Further features and advantages of the invention will become more evident from the following description of some of its preferred embodiments, made below by way of non-limiting example with reference to the following illustrative examples.

## EXPERIMENTAL PART

### Methods

#### Thermal conductivity

The thermal conductivity of the material was assessed using a thermoflowmeter (NETZSCH HFM 446 Lambda Series) in which, by applying a temperature gradient and the measurement of the heat flow through the sample, the thermal conductivity is calculated using the Fourier's equation for thermal conductivity. Samples, measuring 200 x 200 mm and having a minimum thickness of 5 mm were tested under optimal conditions as soon as the freeze-drying cycle was completed. For the testing purpose, they were placed in between the two thermal plates of the thermal flowmeter and a pressure of 2kPa was applied in order to minimize the contact resistance present at the interfaces. Each data was replicated 3 times on three different samples and the mean value and its standard deviation are reported here.

#### Compressive strength

A Shimadzu Autograph 2, AG-10TA equipped with a 100 kN load cell was used to perform a compression test on specimens with dimensions of 50 x 50 x 20 mm. The crosshead speed during the test was 1.3 mm/min. Each specimen before the test was conditioned 12h in an oven at 45 °C.

Sound absorption

Sound absorption was measured using a Kundt tube by generating a plane sound signal at various frequencies (from 20 to 4000 hz). This sound front generated by a speaker at one end of the instrument strikes the sample perpendicularly placed at the opposite end of the tube and two microphones placed between the speaker and the sample to be tested record the intensity of the wave incident (Iinc) on the sample and reflected (Irif) from the sample. The absorption coefficient, specific for each frequency, is expressed as the ratio between the intensity of the absorbed signal (Iass) (calculated as the difference between the two recorded intensities) and the intensity of the incident signal: $\alpha$ = Iass/Iinc.
The sound absorption tests were carried out on circular section samples having a diameter of 45 mm and a thickness of 20 mm.

**Reference Example 1** - **Production of the starting material.**

The starting material used to test the recycling method according to the present invention comprises an ionic polymeric network composed of calcium alginate within which pulverized glass fiber derived from processing waste is dispersed as an inert material, obtained according to the instruction of patent EP3216825A1. In particular, with a final volume of 700 ml, a solution of alginate was prepared at a concentration of 1.4% w/v to which was added a quantity equal to 5% weight/weight (with respect to the weight of the final material without water) of pulverized glass fiber and a quantity of CaCOs at a concentration of 15 mM. Solubilization of the polymer and homogenization of the solution was assisted by the use of magnetic stirring in a laboratory beaker. To initialize the gelation of the polymer, GDL was added in the concentration of 60 mM. Subsequently, the mixture was poured into a square-shaped mold having side dimensions of 200 x 200 mm. During this step, CaCOs dissociates, as a result of proton release caused by GDL hydrolysis, releasing $Ca^{2+}$ which then goes on to form the hydrogel. The hydrogel contained in the mold was then frozen for at least 12h (preferably maximum 48h) at a temperature of -30 °C and subsequently subjected to freeze-drying (Alpha 1-2 LO Plus) for at least 48h (preferably 72h).

**Example 1** - **recycling method**

To demonstrate the efficacy of the recycling method according to the present invention, 55 grams of a sample of a material obtained in Reference Example 1 were fed to a disc mill and pulverized.
330 ml of an aqueous solution of 2Na-EDTA 0.1 M was then prepared, so as to have a solution containing a number of moles of complexing agent equal to 3 times the moles of $Ca^{2+}$ ions contained in 55 grams of starting material according to reference example 1. Said aqueous solution was stabilized to a pH value of 8 by the addition of 1 M NaOH solution.
The 55 grams of powder of the sample material obtained in reference example 1 were then added to said aqueous solution. The resulting mixture was stabilized to a pH value of 7.5 at a total volume of 600 mL by the addition of distilled water and a 0.1M NaOH solution. The solution was then placed under stirring at 20 °C for a time of 60 minutes, observing the formation of a homogeneous system.
To the resulting mixture, 63 ml of a 2 M GDL aqueous solution was then added, again under stirring, so that the solution contained 4 times as many moles of acidifying agent as 2Na-EDTA. The solution was then immediately poured into a square mold having side dimensions of 200 x 200 mm, similar to what was done in the production of the starting material obtained in Reference Example 1. The formation of a hydrogel was then observed.
The hydrogel thus obtained was then frozen for 12 h at a temperature of -30 °C and subsequently subjected to freeze-drying (Alpha 1-2 LO Plus) for 72 h. A sample of recycled material was thus obtained.

**Example 2** - **Material characterization**

The following samples are labelled as follows:

- ORIG: sample of material produced according to Reference Example 1;

- RICIC: samples of recycled material produced according to Example 1.

ORIG and RICIC were subjected to characterization tests for thermal conductivity, compressive strength, and sound absorption according to the methods described in the above entitled "Methods" section.
Table 1 shows the thermal conductivity values tested at 20°C.

TABLE 1

|  | Thermal Conductivity Measured at 20 °C | |
|---|---|---|
|  | mW/(m·K) | Dev. st. |
| ORIG | 43.3280 | 0.1694 |
| RICIC | 49.2280 | 1.5441 |

As evidenced from the data shown in Table 1, the recycled material (RICIC) shows thermal conductivity values that are quite similar and comparable to the starting material (ORIG).

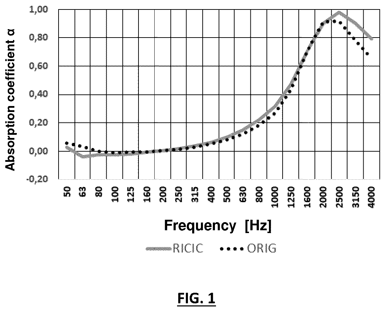

Figure 1 shows the sound absorption curves obtained from the characterization of the recycled material (RICIC) in Example 1 and the starting material (ORIG) obtained in Reference Example 1. Table 2 also shows the respective data divided into third-octave bands.

TABLE 2

|  | $\alpha$ | |
|---|---|---|
| Hz | RICIC | ORIG |
| 50.00 | 0.03 | 0.05 |
| 63.00 | -0.04 | 0.03 |
| 80.00 | -0.03 | 0.00 |
| 100.00 | -0.03 | -0.01 |
| 125.00 | -0.02 | -0.01 |
| 160.00 | -0.01 | -0.01 |
| 200.00 | 0.00 | 0.00 |
| 250.00 | 0.02 | 0.01 |
| 315.00 | 0.04 | 0.03 |
| 400.00 | 0.06 | 0.05 |
| 500.00 | 0.10 | 0.08 |
| 630.00 | 0.15 | 0.12 |
| 800.00 | 0.22 | 0.18 |
| 1000.00 | 0.32 | 0.27 |
| 1250.00 | 0.47 | 0.43 |
| 1600.00 | 0.70 | 0.70 |
| 2000.00 | 0.90 | 0.91 |
| 2500.00 | 0.98 | 0.92 |
| 3150.00 | 0.90 | 0.78 |
| 4000.00 | 0.79 | 0.66 |

As evidenced from the data shown in Figure 1 and Table 2, the recycled material (RICIC) shows acoustic absorption values that are quite similar and comparable with the starting material (ORIG).

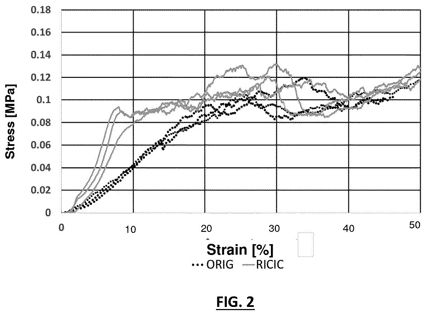

On the other hand, Figure 2 shows the compressive strength tests performed in triplicate.

As evidenced from the data shown in Figure 2, the recycled material (RICIC) shows acoustic absorption values that are completely similar and comparable with the starting material (ORIG).

**Claims**

1. A method for recycling a material comprising at least one continuous phase consisting of an ionic polymeric network composed of at least one polyanionic polymer and at least one cation, comprising the steps of:

(a) preparing a powder of at least one material comprising at least one continuous phase consisting of an ionic polymeric lattice composed of at least one polyanionic polymer and at least one cation;
(b) preparing an aqueous solution of a complexing agent of said at least one cation;
(c) adding to the aqueous solution of step b) the powder obtained from step a), in order to disaggregate said ionic polymeric network composed of at least one polyanionic polymer and at least one cation and to obtain an aqueous mixture comprising at least one polyanionic polymer and at least one complex of said at least one cation with said complexing agent;
(d) adding to the aqueous mixture of step (c) an acidifying agent, so as to decompose said complex and form a hydrogel comprising an ionic polymeric lattice composed of said at least one polyanionic polymer and said at least one cation; and
(e) dehydrating said hydrogel of step d), such as to obtain a recycled material comprising at least one continuous phase consisting of an ionic polymeric lattice composed of said at least one polyanionic polymer and said at least one cation.

2. The method according to claim 1, in which said at least one polyanionic polymer is an anionic polysaccharide.

3. The method according to claim 2, wherein said polysaccharide is selected from the group consisting of: alginate, carrageenan, hyaluronic acid, pectin, cellulose, and xanthan.

4. The method according to any one of claims 1 to 3, wherein said at least one cation is selected from the group consisting of: $K^+$, $Ca^{2+}$, $Sr^{2+}$, $Cu^{2+}$, $Ba^{2+}$, $Zn^{2+}$, $Co^{2+}$, $Mn^{2+}$, $Ni^{2+}$.

5. The method according to any one of claims 1 to 4, wherein said at least one complexing agent is selected from the group consisting of: ethylenediaminetetraacetic acid (2Na - EDTA), ethylenediaminetetraacetic acid (EDTA), Ethylenediaminediacetic acid (EDDA), tricine, ethylene diamino-disuccinic acid (EDDS), and methyl-glycine diacetate (MGDA).

6. The method according to any one of claims 1 to 5, in which said phase (b) said aqueous solution has a pH greater than or equal to 7.

7. The method according to any one of claims 1 to 6, wherein said phase c) said aqueous mixture is maintained at a temperature ranging from 10 °C to 80 °C.

8. The method according to any one of claims 1 to 7, wherein said acidifying agent is selected from the group consisting of: an organic acid, HCl, or mixtures thereof.

9. The method according to claim 8, wherein said organic acid is glucono delta lactone (GDL).

10. The method according to any one of claims 1 to 9, wherein in said step d) said aqueous mixture is brought to a pH that less than or equal to 5.

11. The method according to any one of claims 1 to 10, comprising the step of: transferring into a mold said hydrogel of said phase d).

12. The method according to any one of claims 1 to 11, wherein said dehydrating said hydrogel is carried out by freeze-drying.

13. A recycled material comprising at least one continuous phase consisting of a polymeric ionic network composed of at least one polyanionic polymer and at least one cation, and wherein said recycled material further comprises a complexing agent of said at least one cation.

14. A method for recycling a material comprising at least one continuous step consisting of an ionic polymeric network composed of at least one polyanionic polymer and at least one cation, and at least one complexing agent of said at least one cation, comprising the steps of:

A) preparing a powder of a material comprising at least one continuous phase consisting of an ionic polymeric network composed of at least one polyanionic polymer and at least one cation, and at least one complexing agent of said at least one cation;

B) dispersing the powder obtained from step A) in an aqueous solution, so as to disaggregate said ionic polymeric lattice and obtain an aqueous mixture comprising at least one polyanionic polymer and at least one complex of said at least one cation with said complexing agent;

C) adding to the aqueous mixture of step B) an acidifying agent, so as to decompose said complex and form a hydrogel comprising an ionic polymeric lattice composed of said at least one polyanionic polymer and said at least one cation; and

D) dehydrating said hydrogel of step C).

15. The method according to claim 14, wherein said dehydrating said hydrogel is performed by freeze-drying.

16. An article selected from the group consisting of: sound absorbing panel, sound insulating panel, and heat insulating panel, wherein at least one element of said article comprises or consists of at least one recycled material according to claim 13, or a material obtained by the method according to claim 14 or 15.


**Patentansprüche**

1. Verfahren zur Wiederverwertung eines Materials, das mindestens eine kontinuierliche Phase umfasst, die aus einem ionischen Polymernetzwerk besteht, das aus mindestens einem polyanionischen Polymer und mindestens einem Kation zusammengesetzt ist, umfassend die Schritte:

   (a) Herstellen eines Pulvers aus mindestens einem Material, das mindestens eine kontinuierliche Phase umfasst, die aus einem ionischen Polymergitter besteht, das aus mindestens einem polyanionischen Polymer und mindestens einem Kation zusammengesetzt ist;

   (b) Herstellen einer wässrigen Lösung aus einem Komplexbildner des mindestens einen Kations;

   (c) Zugeben des in Schritt a) erhaltenen Pulvers zu der wässrigen Lösung von Schritt b), um das ionische Polymernetzwerk, das aus mindestens einem polyanionischen Polymer und mindestens einem Kation zusammengesetzt ist, aufzulösen und um ein wässriges Gemisch zu erhalten, das mindestens ein polyanionisches Polymer und mindestens einen Komplex aus dem mindestens einen Kation mit dem Komplexbildner umfasst;

   (d) Zugeben eines Säurungsmittels zu dem wässrigen Gemisch von Schritt (c), um den Komplex zu zersetzen und ein Hydrogel zu bilden, das ein ionisches Polymergitter umfasst, das aus dem mindestens einen polyanionischen Polymer und dem mindestens einen Kation zusammengesetzt ist; und

   (e) Dehydrieren des Hydrogels von Schritt d), so dass ein wiederverwertetes Material erhalten wird, das mindestens eine kontinuierliche Phase umfasst, die aus einem ionischen Polymergitter besteht, das aus dem mindestens einen polyanionischen Polymer und dem mindestens einen Kation zusammengesetzt ist.

2. Verfahren nach Anspruch 1, wobei das mindestens eine polyanionische Polymer ein anionisches Polysaccharid ist.

3. Verfahren nach Anspruch 2, wobei das Polysaccharid ausgewählt ist aus der Gruppe, bestehend aus: Alginat, Carrageen, Hyaluronsäure, Pektin, Cellulose und Xanthan.

4. Verfahren nach einem der Ansprüche 1 bis 3, wobei das mindestens eine Kation aus der Gruppe ausgewählt ist, bestehend aus: $K^+$, $Ca^{2+}$, $Sr^{2+}$, $Cu^{2+}$, $Ba^{2+}$, $Zn^{2+}$, $Co^{2+}$, $Mn^{2+}$, $Ni^{2+}$.

5. Verfahren nach einem der Ansprüche 1 bis 4, wobei der mindestens eine Komplexbildner aus der Gruppe ausgewählt ist, bestehend aus: Ethylendiamintetraessigsäure (2Na-EDTA), Ethylendiamintetraessigsäure (EDTA), Ethylendiamindiessigsäure (EDDA), Tricin, Ethylendiamindibernsteinsäure (EDDS) und Methylglycindiacetat (MGDA).

6. Verfahren nach einem der Ansprüche 1 bis 5, wobei die wässrige Lösung in der Phase (b) einen pH von mehr als oder gleich 7 aufweist.

7. Verfahren nach einem der Ansprüche 1 bis 6, wobei das wässrige Gemisch in der Phase c) bei einer Temperatur im Bereich von 10 °C bis 80 °C gehalten wird.

8. Verfahren nach einem der Ansprüche 1 bis 7, wobei das mindestens eine Säurungsmittel aus der Gruppe ausgewählt ist, bestehend aus: einer organischen Säure, HCl oder Gemischen davon.

9. Verfahren nach Anspruch 8, wobei die organische Säure Glucono-delta-Lacton (GDL) ist.

10. Verfahren nach einem der Ansprüche 1 bis 9, wobei das wässrige Gemisch in dem Schritt d) auf einen pH von weniger als oder gleich 5 gebracht wird.

11. Verfahren nach einem der Ansprüche 1 bis 10, das den Schritt umfasst:
Überführen des Hydrogels von Phase d) in eine Form.

12. Verfahren nach einem der Ansprüche 1 bis 11, wobei das Dehydrieren des Hydrogels durch Gefriertrocknen ausgeführt wird.

13. Wiederverwertetes Material, das mindestens eine kontinuierliche Phase umfasst, die aus einem ionischen Polymernetzwerk besteht, das aus mindestens einem polyanionischen Polymer und mindestens einem Kation zusammengesetzt ist, und wobei das wiederverwertete Material ferner einen Komplexbildner des mindestens einen Kations umfasst.

14. Verfahren zur Wiederverwertung eines Materials, das mindestens eine kontinuierliche Phase, die aus einem ionischen Polymernetzwerk besteht, das aus mindestens einem polyanionischen Polymer und mindestens einem Kation zusammengesetzt ist, und mindestens einen Komplexbildner des mindestens einen Kations umfasst, umfassend die Schritte:

A) Herstellen eines Pulvers aus einem Material, das mindestens eine kontinuierliche Phase, die aus einem ionischen Polymernetzwerk besteht, das aus mindestens einem polyanionischen Polymer und mindestens einem Kation zusammengesetzt ist, und mindestens einen Komplexbildner des mindestens einen Kations umfasst;
B) Dispergieren des in Schritt A) erhaltenen Pulvers in einer wässrigen Lösung, um das ionische Polymergitter aufzulösen und ein wässriges Gemisch zu erhalten, das mindestens ein polyanionisches Polymer und mindestens einen Komplex aus dem mindestens einen Kation mit dem Komplexbildner umfasst;
C) Zugeben eines Säurungsmittels zu dem wässrigen Gemisch von Schritt B), um den Komplex zu zersetzen und ein Hydrogel zu bilden, das ein ionisches Polymergitter umfasst, das aus dem mindestens einen polyanionischen Polymer und dem mindestens einen Kation zusammengesetzt ist; und
D) Dehydrieren des Hydrogels von Schritt C).

15. Verfahren nach Anspruch 14, wobei das Dehydrieren des Hydrogels durch Gefriertrocknen durchgeführt wird.

16. Artikel, ausgewählt aus der Gruppe, bestehend aus: schallabsorbierender Platte, schallisolierender Platte und wärmeisolierender Platte, wobei mindestens ein Element des Artikels mindestens ein wiederverwertetes Material nach Anspruch 13 oder ein nach dem Verfahren nach Anspruch 14 oder 15 erhaltenes Material umfasst oder daraus besteht.

## Revendications

1. Procédé de recyclage d'un matériau comprenant au moins une phase continue constituée d'un réseau polymérique ionique composé d'au moins un polymère polyanionique et d'au moins un cation, comprenant les étapes consistant à :

(a) préparer une poudre d'au moins un matériau comprenant au moins une phase continue constituée d'une maille polymérique ionique composée d'au moins un polymère polyanionique et d'au moins un cation ;
(b) préparer une solution aqueuse d'un agent complexant dudit au moins un cation ;
(c) ajouter à la solution aqueuse de l'étape b) la poudre obtenue à l'étape a), afin de désagréger ledit réseau polymérique ionique composé d'au moins un polymère polyanionique et d'au moins un cation et d'obtenir un mélange aqueux comprenant au moins un polymère polyanionique et au moins un complexe dudit au moins un cation avec ledit agent complexant ;
(d) ajouter au mélange aqueux de l'étape (c) un agent acidifiant, de manière à décomposer ledit complexe et à former un hydrogel comprenant une maille polymérique ionique composée dudit au moins un polymère polyanionique et dudit au moins un cation ; et
(e) déshydrater ledit hydrogel de l'étape d), de manière à obtenir un matériau recyclé comprenant au moins une phase continue constituée d'une maille polymérique ionique composée dudit au moins un polymère polyanionique et dudit au moins un cation.

2. Procédé selon la revendication 1, dans lequel ledit au moins un polymère polyanionique est un polysaccharide anionique.

3. Procédé selon la revendication 2, dans lequel ledit polysaccharide est choisi dans le groupe constitué par : l'alginate, le carraghénane, l'acide hyaluronique, la pectine, la cellulose et le xanthane.

4. Procédé selon l'une quelconque des revendications 1 à 3, dans lequel ledit au moins un cation est choisi dans le groupe constitué de : $K^+$, $Ca^{2+}$, $Sr^{2+}$, $Cu^{2+}$, $Ba^{2+}$, $Zn^{2+}$, $Co^{2+}$, $Mn^{2+}$, $Ni^{2+}$.

5. Procédé selon l'une quelconque des revendications 1 à 4, dans lequel ledit au moins un agent complexant est choisi dans le groupe constitué par : l'acide éthylènediaminetétraacétique (2Na-EDTA), l'acide éthylènediaminetétraacétique (EDTA), l'acide éthylènediaminediacétique (EDDA), la tricine, l'acide éthylènediaminodisuccinique (EDDS) et le diacétate de méthyl-glycine (MGDA).

6. Procédé selon l'une quelconque des revendications 1 à 5, dans lequel ladite phase (b) de ladite solution aqueuse a un pH supérieur ou égal à 7.

7. Procédé selon l'une quelconque des revendications 1 à 6, dans lequel ladite phase c) dudit mélange aqueux est maintenue à une température allant de 10 °C à 80 °C.

8. Procédé selon l'une quelconque des revendications 1 à 7, dans lequel ledit agent acidifiant est choisi dans le groupe constitué par : un acide organique, HCl, ou des mélanges de ceux-ci.

9. Procédé selon la revendication 8, dans lequel ledit acide organique est la glucono delta lactone (GDL).

10. Procédé selon l'une quelconque des revendications 1 à 9, dans lequel, dans ladite étape d), ledit mélange aqueux est amené à un pH inférieur ou égal à 5.

11. Procédé selon l'une quelconque des revendications 1 à 10, comprenant l'étape consistant à : transférer dans un moule ledit hydrogel de ladite phase d).

12. Procédé selon l'une quelconque des revendications 1 à 11, dans lequel ladite déshydratation dudit hydrogel est réalisée par lyophilisation.

13. Matériau recyclé comprenant au moins une phase continue constituée d'un réseau ionique polymère composé d'au moins un polymère polyanionique et d'au moins un cation, et dans lequel ledit matériau recyclé comprend en outre un agent complexant dudit au moins un cation.

14. Procédé de recyclage d'un matériau comprenant au moins une étape continue consistant en un réseau polymérique ionique composé d'au moins un polymère polyanionique et d'au moins un cation, et d'au moins un agent complexant dudit au moins un cation, comprenant les étapes consistant à :

A) préparer une poudre d'un matériau comprenant au moins une phase continue constituée d'un réseau polymérique ionique composé d'au moins un polymère polyanionique et d'au moins un cation, et d'au moins un agent complexant dudit au moins un cation ;
B) disperser la poudre obtenue à l'étape A) dans une solution aqueuse, de manière à désagréger ladite maille polymérique ionique et à obtenir un mélange aqueux comprenant au moins un polymère polyanionique et au moins un complexe dudit au moins un cation avec ledit agent complexant ;
C) ajouter au mélange aqueux de l'étape B) un agent acidifiant, de manière à décomposer ledit complexe et à former un hydrogel comprenant une maille polymérique ionique composée dudit au moins un polymère polyanionique et dudit au moins un cation ; et
D) déshydrater ledit hydrogel de l'étape C).

15. Procédé selon la revendication 14, dans lequel ladite déshydratation dudit hydrogel est effectuée par lyophilisation.

16. Article choisi dans le groupe constitué par : un panneau d'absorption acoustique, un panneau d'isolation acoustique et

EP 3 865 534 B1

un panneau d'isolation thermique, dans lequel au moins un élément dudit article comprend ou consiste en au moins un matériau recyclé selon la revendication 13, ou un matériau obtenu par le procédé selon la revendication 14 ou 15.

**FIG. 1**

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5718862 A
- WO 2016014158 A
- CN 110183927
- EP 3216825 A1